# EUROPÄISCHE PATENTSCHRIFT

(11) **EP 2 609 314 B1**
(45) Veröffentlichungstag und Bekanntmachung des Hinweises auf die Patenterteilung: **10.09.2014**
(21) Anmeldenummer: 11736069.3
(22) Anmeldetag: 20.07.2011
(51) Int. Cl.: F02D 11/02, F02D 11/10, F02D 37/02, B60W 50/10, G05G 1/38, B60K 26/02

(54) **LEISTUNGSSTEUERUNGSANORDNUNG FÜR EINEN ANTRIEBSMOTOR EINES KRAFTFAHRZEUGES**
POWER CONTROL ARRANGEMENT FOR A DRIVE MOTOR OF A MOTOR VEHICLE
SYSTÈME DE COMMANDE DE PUISSANCE POUR UN MOTEUR D'ENTRAÎNEMENT D'UN VÉHICULE AUTOMOBILE

(30) Priorität: 27.08.2010 DE 102010039892
(43) Veröffentlichungstag der Anmeldung: 03.07.2013
(73) Patentinhaber: Robert Bosch GmbH, 70442 Stuttgart (DE)
(72) Erfinder: RIES-MUELLER, Klaus, 74906 Bad Rappenau (DE)
(86) Internationale Anmeldenummer: PCT/EP2011/062407
(87) Internationale Veröffentlichungsnummer: WO 2012/025310

(56) Entgegenhaltungen:
- WO-A1-01/72565
- FR-A1- 2 879 527
- GB-A- 2 348 325
- US-A- 5 835 008

## Beschreibung

Die vorliegende Erfindung betrifft ein Verfahren zur Steuerung und/oder Regelung der Leistung eines Antriebsmotors in einem Kraftfahrzeug gemäß dem Oberbegriff des Anspruches 1, eine Leistungssteuerungsanordnung für einen Antriebsmotor eines Kraftfahrzeuges gemäß dem Oberbegriff des Anspruches 8, ein Verfahren zur Steuerung und/oder Regelung der Verzögerung eines Kraftfahrzeuges gemäß dem Oberbegriff des Anspruches 12 und eine Verzögerungssteuerungsanordnung für ein Kraftfahrzeug gemäß dem Oberbegriff des Anspruches 15.

### Stand der Technik

In Kraftfahrzeugen mit einem Verbrennungsmotor zum Antrieb des Kraftfahrzeuges werden zunehmend Verbrennungsmotoren mit einer Aufladung des Verbrennungsmotors eingesetzt. Ein Verbrennungsmotor mit einer Aufladung, beispielsweise mit einem Abgasturbolader oder einem Kompressor, leistet eine wesentlich höhere mechanische Leistung als Verbrennungsmotoren ohne eine Aufladung auf den Hubraum des Verbrennungsmotors bezogen. Während des Stillstandes eines Kraftfahrzeuges, zum Beispiel an einer Ampel, läuft der Verbrennungsmotor in einem niedrigen Drehzahlbereich und die Turboaufladung des Verbrennungsmotors ist nicht oder nur in einem sehr geringen Umfang vorhanden. Dadurch läuft der Verbrennungsmotor im Wesentlichen im Saugbetrieb, sodass aufgrund des kleinen Hubraums des Verbrennungsmotors dieser eine geringe Leistung erbringt. Beim Anfahren mit dem Kraftfahrzeug besteht somit Gefahr des Abwürgens des Verbrennungsmotors, weil im niedrigen Drehzahlbereich bzw. Leerlaufbereich ein geringes Drehmoment zur Verfügung steht. Beim Abwürgen des Verbrennungsmotors ist somit in nachteiliger Weise ein erneutes Starten des Verbrennungsmotors erforderlich, mit Unannehmlichkeiten für den Fahrer sowie einem entsprechenden Energieverbrauch sowie einer eventuellen Behinderung des Verkehrsflusses.

Aus der DE 35 10 173 C2 ist eine Überwachungseinrichtung für eine elektronisch steuerbare Drosselklappe in einem Kraftfahrzeug mit einem Fahrpedal, mit einem damit drehfest verbundenen Fahrpedal-Stellungsgeber, mit einem Stellglied für die Drosselklappe des Verbrennungsmotors und einem damit drehfest verbundenen Stellungsgeber, mit einem Regler, der von dem Fahrpedal-Stellungsgeber einen Soll-Wert und vom Stellungsgeber für die Drosselklappe einen Ist-Wert erhält und eine Endstufe für das Stellglied ansteuert.

Kraftfahrzeuge weisen zur Verzögerung des Kraftfahrzeuges Bremsen an den Rädern des Kraftfahrzeuges auf. Die Bremsen werden dabei vom Fahrer mittels eines Niederdrückens eines Bremspedals betätigt. Dabei benötigt die Bremse bzw. die Bremseinrichtung eine bestimmte Reaktionszeit von dem Beginn des Niederdrückens des Bremspedals bis eine erste Verzögerung des Kraftfahrzeuges eintritt. In kritischen Fahrsituationen ist eine möglichst kurze Reaktionszeit der Bremse bzw. der Bremseinrichtung des Kraftfahrzeuges erwünscht, um einen möglichst schnellen Stillstand des Kraftfahrzeuges oder ein möglichst schnelle Reduzierung der Geschwindigkeit des Kraftfahrzeuges zu ermöglichen.

Ein Verfahren gemäß dem Oberbegriff des Anspruchs 1 ist aus US 835 008 A bekannt.

### Offenbarung der Erfindung

### Vorteile der Erfindung

Verfahren zur Steuerung und/oder Regelung der Leistung eines Antriebsmotors, insbesondere eines Verbrennungsmotors, einer Hybridantriebseinrichtung mit einem Verbrennungsmotor und einem Elektromotor oder eines Elektromotors, in einem Kraftfahrzeug mit den Schritten: Erfassen der Stellung eines Fahrpedals, Verändern der Stellung des Fahrpedals, indem das Fahrpedal mit einer mechanischen Berührung von einem Fuß eines Fahrers bewegt wird, Steuern der Leistung des Antriebsmotors mit dem wenigstens einen Stellglied, z. B. eine Drosselklappe, in Abhängigkeit von der erfassten Stellung des Fahrpedals, wobei der Abstand des Fußes des Fahrers von dem Fahrpedal erfasst wird und bei einem Unterschreiten wenigstens eines vorgegebenen Mindestabstandes des Fußes von dem Fahrpedal wenigstens eine Maßnahme eingeleitet wird.

Der Abstand des Fußes des Fahrers oder eines Schuhs des Fahrers wird dabei berührungslos von einem Abstandssensor erfasst. Der wenigstens eine vorgegebene Mindestabstand beträgt dabei beispielsweise 1, 3, 5, 7 oder 10 cm, das heißt, der wenigstens eine vorgegebene Mindestabstand liegt in einem Bereich zwischen 0 und 20 oder 15 oder 10 cm. Damit ist es in vorteilhafter Weise ermöglicht, bereits vor einem Berühren und Niedertreten des Fahrpedals bzw. Gaspedals mit einem Schuh oder einem Fuß des Fahrers, Maßnahmen zu ergreifen, um ein Abwürgen des Antriebsmotors beim Anfahren des Kraftfahrzeugs zu verhindern.

Erfindungsgemäß vermindert die wenigstens eine Maßnahme das Risiko eines Abwürgens des Antriebsmotors beim Anfahren nach einem Stillstand des Kraftfahrzeuges.

Die wenigstens eine Maßnahme wird ausschließlich bei einem Stillstand des Kraftfahrzeuges eingeleitet. Die wenigstens eine Maßnahme soll das Risiko oder die Wahrscheinlichkeit eines Abwürgens des Verbrennungsmotors beim Anfahren nach einem Stillstand des Kraftfahrzeuges vermindern. Während des Fahrens des Kraftfahrzeuges macht es somit keinen Sinn, die wenigstens eine Maßnahme bei einer Annäherung des Fußes an das Fahrpedal einzuleiten.

In einer ergänzenden Variante wird die Geschwindigkeit der Annäherung des Fußes zu dem Fahrpedal erfasst und in Abhängigkeit von der Geschwindigkeit der Annäherung wird wenigstens eine einzuleitende Maßnahme ausgewählt und/oder der Grad bzw. die Größe der wenigstens einen eingeleiteten Maßnahme wird bestimmt. Die wenigstens eine Maßnahme kann mit einem unterschiedlichen Grad bzw. in einer unterschiedlichen Größe eingeleitet werden. Ist die wenigstens eine Maßnahme beispielsweise eine Erhöhung der Leerlaufdrehzahl des Verbrennungsmotors, kann bei einer sehr schnellen Annäherung des Fußes an das Fahrpedal die Drehzahl stärker erhöht werden als bei einer nur langsamen Annäherung des Fußes an das Fahrpedal. Daher ist es auch möglich, bei einer schnellen Annäherung mehr Maßnahmen einzuleiten, als bei einer nur langsamen Annäherung. Beispielsweise kann bei einer sehr schnellen Annäherung des Fußes an das Fahrpedal, neben der Drehzahl auch die Zündwinkelreserve erhöht werden und bei einer nur langsamen Annäherung lediglich nur die Drehzahl des Verbrennungsmotors erhöht werden.

In einer ergänzenden Ausgestaltung verändert die wenigstens eine Maßnahme wenigstens einen Parameter des Antriebsmotors und/oder eines Getriebes. Der wenigstens eine Parameter des Verbrennungsmotors ist beispielsweise die Drehzahl des Verbrennungsmotors, die eingespritzte Menge an Kraftstoff oder der Zündzeitpunkt und der wenigstens eine Parameter des Getriebes ist beispielsweise das Übersetzungsverhältnis des Getriebes oder ein Öldruck in einem Getriebe, insbesondere in einem Automatikgetriebe.

In einer zusätzlichen Ausführungsform ist die wenigstens eine Maßnahme eine Erhöhung der Zündwinkelreserve und/oder ein Abschalten wenigstens eines Verbrauchers, z. B. ein Klimakompressor, ein Stromgenerator, eine Wasserpumpe oder eine elektrische Heizeinrichtung, und/oder ein Starten des Verbrennungsmotors bei dem Kraftfahrzeug mit einer Start-Stopp-Automatik und/oder eine Erhöhung der Drehzahl des Antriebsmotors und/oder eine Öldruckaktivierung bzw. Öldruckveränderung eines Automatikgetriebes, insbesondere bei dem Kraftfahrzeug mit einer Start-Stopp-Automatik, und/oder eine Erhöhung des Öldruckes in einer Kupplungsansteuerung und/oder eine Erhöhung des Ladedruckes bei dem Verbrennungsmotor mit Aufladung und/oder ein Schalten von "Neutral" auf "Drive" bei einem Kraftfahrzeug mit Automatikgetriebe und/oder eine Betriebsartenumschaltung bei einem Verbrennungsmotor mit Benzindirekteinspritzung von einem energiesparenden Schichtbetrieb in einen leistungsorientierten Homogenbetrieb und/oder eine Veränderung der Übersetzung des Getriebes des Kraftfahrzeuges und/oder eine Erhöhung der Bestromung des Elektromotors mit einer Leistungselektronik bei einen Elektromotor oder einem einer Hybridantriebseinrichtung.

In einer ergänzenden Ausführungsform wird die wenigstens eine eingeleitete Maßnahme nach einer vorgegebenen Zeit beendet, sofern der Fuß das Fahrpedal nicht berührt oder die wenigstens eine Maßnahme wird nach einer Berührung des Fahrpedals mit dem Fuß beendet.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: einen stark vereinfachte Ansicht einer Leistungssteuerungsanordnung,
- Fig. 2: eine stark vereinfachte Ansicht
einer Verzögerungssteuerungsanordnung und
- Fig. 3: eine Seitenansicht eines Kraftfahrzeuges.

### Ausführungsformen der Erfindung

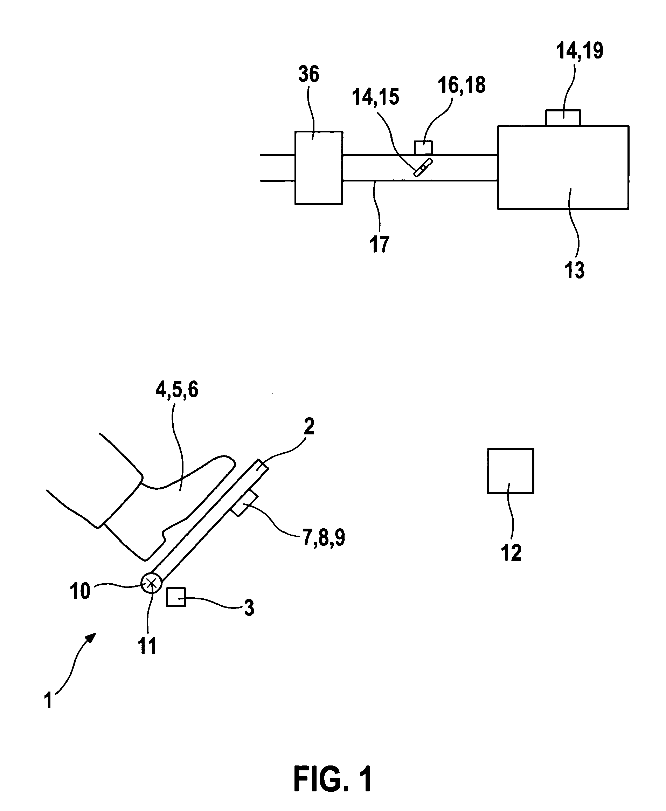

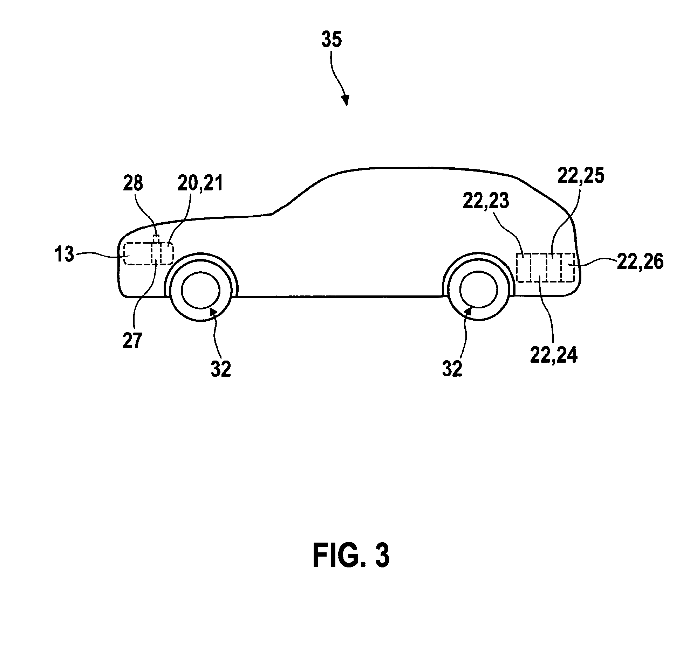

Eine in Fig. 1 dargestellte Leistungssteuerungsanordnung 1 dient zur Steuerung und/oder Regelung der Leistung eines Verbrennungsmotors 13 als Antriebsmotor 13 in einem Kraftfahrzeug 35 (Fig. 3). Ein Fahrer 6 des Kraftfahrzeugs 35 kann mittels Betätigen eines Fahrpedals 2 bzw. eines Gaspedals 2 die Leistung des Verbrennungsmotors 13 steuern und/oder regeln und dadurch das Kraftfahrzeug 35 beschleunigen.

Die Leistungssteuerungsanordnung 1 umfasst das Fahrpedal 2, welches mit einer Lagerung 10 um eine Rotationsachse 11 verschwenkbar gelagert ist. Mit einer Einrichtung 3 kann die Lage des Fahrpedals 2, das heißt der Drehwinkel des Fahrpedals 2, erfasst werden. Die Einrichtung 3 umfasst dabei beispielsweise einen Potentiometer und einen Mechanismus (nicht dargestellt), mittels dem die von dem Fahrpedal 2 ausgeführte Verschwenkbewegung auf den nicht dargestellten Potentiometer übertragen wird. Der Potentiometer wandelt dabei eine Drehstellung in ein elektrisches Signal um und das elektrische Signal wird zu einer Steuerungseinheit 12 der Leistungssteuerungsanordnung 1 übertragen. Hierzu ist die Einrichtung 3 mittels nicht dargestellter Signalübertragungseinrichtungen, insbesondere elektrischen Leitungen, mit der Steuerungseinheit 12 verbunden. Die Steuerungseinheit 12 dient dabei nicht nur zur Steuerung der Leistungssteuerungsanordnung 1, sondern auch zur Steuerung des Verbrennungsmotors 13 sowie eines als Automatikgetriebe 21 ausgebildeten Getriebes 20. Durch das Berühren oder Aufbringen einer Kraft durch einen Schuh 5 oder einen Fuß 4 des Fahrers 6 kann das Fahrpedal 2 um die Rotationsachse 11 verschwenkt werden. Bringt der Fahrer keine Kraft mehr auf das Fahrpedal 2 auf, wird mittels eines nicht dargestellten elastischen Elementes, beispielsweise einer Feder, das Fahrpedal 2 wieder in eine Ausgangsstellung selbsttätig zurückbewegt. Die Steuerungseinheit 12 steuert die Leistung des Verbrennungsmotors 13 in Abhängigkeit von dem Drehwinkel des Fahrpedals 2. Der Verbrennungsmotor 13 weist eine Turboaufladung auf und verfügt damit über einen Turbolader 36. Durch den Turbolader 36 wird in einen Ansaugkanal 17 Verbrennungsluft unter Druck gesetzt bzw. verdichtet. Innerhalb des Ansaugkanals 17 ist eine Drosselklappe 15 als Stellglied 14 angeordnet. Die Drosselklappe 15 kann von einem Aktuator 16, welcher als Elektromotor 18 ausgebildet ist, verschwenkt werden. Aufgrund der Stellung der Drosselklappe 15 innerhalb des Ansaugkanals 17 kann somit die Leistung des Verbrennungsmotors 13 gesteuert werden. Ferner weist der Verbrennungsmotor 13 eine Einspritzeinrichtung 19 auf, welche ebenfalls ein Stellglied 14 zur Steuerung und/oder Regelung der Leistung des Verbrennungsmotors 13 darstellt. Je mehr Kraftstoff von der Einspritzeinrichtung 19 in die Verbrennungsräume der als Hubkolbenmaschine ausgebildeten Verbrennungsmotors 13 zugeführt wird, desto höher ist die von dem Verbrennungsmotor 13 abgegebene Leistung und umgekehrt. Die beiden Stellglieder 14, nämlich die Drosselklappe 15 und die Einspritzeinrichtung 19, werden dabei von der Steuerungseinheit 12 angesteuert und/oder geregelt. Hierzu sind die beiden Stellglieder 14 mittels Daten- oder Signalübertragungseinrichtungen mit der Steuerungseinheit 12 verbunden, welche vorzugsweise als elektrische Steuerungsleitungen ausgebildet sind.

An dem Fahrpedal 2 ist ein Abstandssensor 7 angeordnet. Der als HF-Sensor 8 oder Radarsensor 9 ausgebildete Abstandssensor 7 erfasst den Abstand des Fußes 4 bzw. des Schuhs 5 des Fahrers 6 zu dem Fahrpedal 2. Der Abstandssensor 7 erfasst dabei diesen Abstand berührungslos. Ab einem Unterschreiten eines Mindestabstands zwischen 0 und 10 cm, zum Beispiel 5 cm, wird von der Steuerungseinheit 12 wenigstens eine Maßnahme zur Verringerung des Risikos des Abwürgens des Verbrennungsmotors 13 beim Anfahren des Kraftfahrzeugs 35 eingeleitet. Die wenigstens eine Maßnahme wird dabei ausschließlich bei einem Stillstand des Kraftfahrzeugs 35 eingeleitet. Als ein Stillstand des Kraftfahrzeugs 35 wird dabei ein Stillstand oder auch eine sehr geringe Fahrgeschwindigkeit des Kraftfahrzeugs 35 von weniger als 5 oder 3 km/h verstanden. Die wenigstens eine eingeleitete Maßnahme ist dabei beispielsweise eine Erhöhung der Leerlaufdrehzahl des Verbrennungsmotors 13 und/oder eine Erhöhung der Zündwinkelreserve des Verbrennungsmotors 13. Bei dem Unterschreiten des vorgegebenen Mindestabstands des Schuhs 5 zu dem Fahrpedal 2 wird von einem kurz bevorstehenden Beschleunigungswunsch des Fahrers 6 für das Kraftfahrzeug 35 ausgegangen. Der Verbrennungsmotor 13 weist aufgrund der Turboaufladung einen relativ geringen Hubraum auf, sodass aufgrund des Einleitens der wenigstens einen Maßnahme bereits vor dem Berühren des Schuhs 5 mit dem Fahrpedal 2 an dem Verbrennungsmotor 13 ein größeres Drehmoment oder eine größere Leistung zur Verfügung steht, weil die beiden Maßnahmen bereits vor dem Betätigen des Fahrpedals 2, das heißt dem Bewegen des Fahrpedals 2 um die Rotationsachse 11, eingeleitet werden. Bei einer Erhöhung der Zündwinkelreserve wird der Verbrennungsmotor 13 kurzzeitig mit einem schlechteren Wirkungsgrad mit einem späteren Zünden betrieben, sodass mittels einer Frühverstellung des Zündwinkels nach einer Betätigung des Fahrpedals 2 ein zusätzliches Drehmoment zur Verfügung steht. Die Erhöhung der Leerlaufdrehzahl des Verbrennungsmotors 13 führt außerdem dazu, dass beim Betätigen des Fahrpedals 2 und der Herstellung eines Kraftschlusses zwischen dem Verbrennungsmotor 13 mittels einer Kupplung 27 und Rädern des Kraftfahrzeugs 35 eine größere mechanische Leistung zur Verfügung steht. Damit kann das Risiko des Abwürgens des Verbrennungsmotors 13 beim Anfahren aus dem Stillstand des Kraftfahrzeugs im Wesentlichen ausgeschlossen werden.

Darüber hinaus wird von dem Abstandssensor 7 der Abstand des Schuhs 5 zu dem Fahrpedal ständig erfasst, sodass von der Steuerungseinheit 12 auch die Geschwindigkeit der Annäherung des Fußes 4 zu dem Fahrpedal 2 berechnet werden kann. Aufgrund dieser Geschwindigkeit der Annäherung des Fußes wird von der Steuerungseinheit 12 der Grad bzw. die Größe der wenigstens einen eingeleiteten Maßnahme bestimmt. Je höher die Geschwindigkeit der Annäherung des Schuhs 5 an das Fahrpedal 2 ist, desto größer ist der Grad oder die Größe der wenigstens einen eingeleiteten Maßnahme, beispielsweise wird eine höhere Leeriaufdrehzahi des Verbrennungsmotors 13 bei einer größeren Geschwindigkeit der Annäherung von der Steuerungseinheit 12 angesteuert und umgekehrt. Außerdem kann in Abhängigkeit von der Geschwindigkeit der Annäherung und dem Abstand des Schuhs 5 von dem Fahrpedal 2 von der Steuerungseinheit 12 auch ausgewählt werden, welche Maßnahmen oder wie viele Maßnahmen eingeleitet werden, um das Risiko des Abwürgens des Verbrennungsmotors zu vermindern. Als Maßnahme zur Verringerung des Abwürgens des Verbrennungsmotors kommt auch das Abschalten von Verbrauchern 22 innerhalb des Kraftfahrzeugs 35 in Betracht, beispielsweise einen Klimakompressor 23, einem Stromgenerator 24 und/oder einer Wasserpumpe 25. Auch eine Erhöhung des Öldrucks in einer Kupplungsansteuerung 28 stellt eine Maßnahme zur Verringerung des Risikos des Abwürgens des Verbrennungsmotors 13 dar.

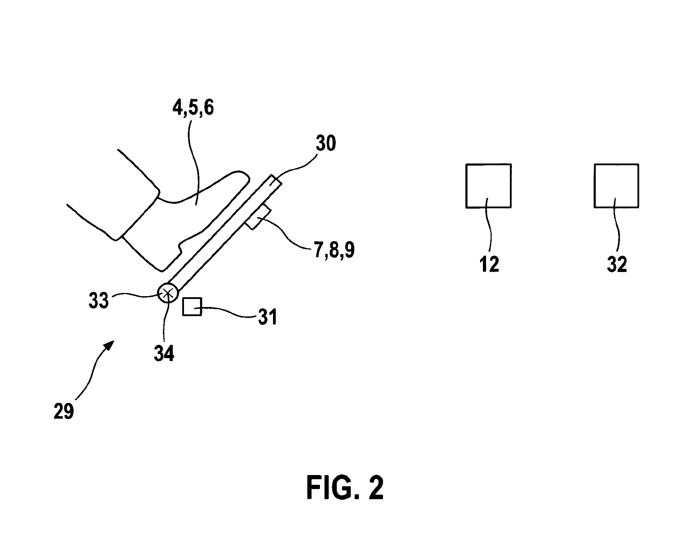

In Fig. 2 ist eine Verzögerungssteuerungsanordnung 29 für das Kraftfahrzeug 35 dargestellt. Mit Hilfe der Verzögerungssteuerungsanordnung 29 kann von dem Fahrer 6 des Kraftfahrzeugs 35 das Kraftfahrzeug 35 verzögert bzw. abgebremst werden. In dem Kraftfahrzeug 35 ist ein Bremspedal 30 angeordnet, welches in analoger Weise zu dem oben beschriebenen Fahrpedal 2 an einer Lagerung 33 gelagert und um eine Rotationsachse 34 verschwenkbar ist. In analoger Weise ist dabei das Bremspedal 13 auch von einem elastischen Element, beispielsweise eine Feder, in eine Ausgangsstellung selbsttätig zurück bewegbar, sofern von dem Schuh 5 auf das Bremspedal 30 keine Kraft aufgebracht ist. Eine Einrichtung 31, in analoger Weise aufgebaut wie die Einrichtung 3, dient zur Erfassung der Stellung des Bremspedals 30. Das Bremspedal 2 ist in analoger Weise mit dem Abstandssensor 7 als HF-Sensor 8 oder dem Radarsensor 9 versehen. In analoger Weise zu der Leistungssteuerungsanordnung 1 wird auch an der Verzögerungssteuerungsanordnung 29 der Abstand des Schuhs 5 von dem Bremspedal 30 erfasst sowie auch die Geschwindigkeit der Annäherung des Fußes 5 zu dem Bremspedal 30. Bei einem Unterschreiten wenigstens eines vorgegebenen Mindestabstands, ebenfalls wiederum im Bereich zwischen 0 und 10 cm, wird von der Verzögerungssteuerungsanordnung 29 wenigstens eine Maßnahme zur Verringerung der Reaktionszeit der Bremsen 32 eingeleitet. Als wenigstens eine Bremse 32 werden dabei vorzugsweise beispielsweise neben einer Scheiben- oder Trommelbremse an einem Rad des Kraftfahrzeugs auch andere Einrichtungen zum Betätigen der Scheiben- oder Trommelbremse verstanden, das heißt ein Bremssystem, beispielsweise mit Hydraulikölleitungen, einem Bremskraftverstärker und Betätigungskolben und Zylinder für Bremsbeläge an den Bremsscheiben. Befindet sich der Schuh 5 des Fahrers 6 in dem vorgegebenen Mindestabstand zu dem Fahrpedal 2 und/oder tritt eine vorgegebene Geschwindigkeit der Annäherung des Fußes 5 zu dem Bremspedal 30 ein, wird als Maßnahme beispielsweise der Öldruck in dem Bremssystem erhöht oder der Abstand des Bremsbelags zu der Bremsscheibe verringert. Dadurch kann die Reaktionszeit der wenigstens einen Bremse 32 bzw. des Bremssystems nach einem Betätigen des Bremspedals 30, das heißt dem mechanischen Kontakt zwischen dem Schuh 5 des Fahrers und dem Bremspedal 30 und der damit verbundenen Verschwenkung des Bremspedals 30 um die Rotationssachse 34, verringert werden.

Die Einzelheiten der verschiedenen Ausführungsbeispiele können miteinander kombiniert werden, sofern nichts Gegenteiliges erwähnt wird.

Insgesamt betrachtet sind mit der erfindungsgemäßen Leistungssteuerungsanordnung 1 wesentliche Vorteile verbunden. Ein möglicherweise bevorstehender Wunsch des Fahrers 6 zum Beschleunigen des Kraftfahrzeugs 35 während eines Stillstands des Kraftfahrzeugs 35 wird erkannt, indem der Abstand des Schuhs 5 zu dem Fahrpedal 2 mit dem Abstandssensor 7 erfasst wird. Aufgrund dieses Erkennens eines möglichen Beschleunigungswunsches können Maßnahmen zur Verringerung des Risikos des Abwürgens des Verbrennungsmotors 13 eingeleitet werden, sodass auch bei Verbrennungsmotoren 13 mit einem geringen Hubraum das Risiko des Abwürgens beim Anfahren signifikant verringert werden kann.

## Patentansprüche

1. Verfahren zur Steuerung und/oder Regelung der Leistung eines Antriebsmotors (13), insbesondere Verbrennungsmotors (13), in einem Kraftfahrzeug (35) mit den Schritten:
- Erfassen der Stellung eines Fahrpedales (2),
- Verändern der Stellung des Fahrpedales (2), indem das Fahrpedal (2) mit einer mechanischen Berührung von einem Fuß (4) eines Fahrers (6) bewegt wird,
- Steuern der Leistung des Antriebsmotors (13) mit dem wenigstens einen Stellglied (14), z. B. eine Drosselklappe (15), in Abhängigkeit von der erfassten Stellung des Fahrpedales (2),
- der Abstand des Fußes (4) des Fahrers (6) von dem Fahrpedal (2) erfasst wird und bei einem Unterschreiten wenigstens eines vorgegebenen Mindestabstandes des Fußes (4) von dem Fahrpedal (2) wenigstens eine Maßnahme eingeleitet wird,
- **dadurch gekennzeichnet, dass**
die wenigstens eine Maßnahme das Risiko eines Abwürgens des Antriebsmotors (13) beim Anfahren nach einem Stillstand des Kraftfahrzeuges (35) vermindert, wobei die wenigstens eine Maßnahme ausschließlich bei einem Stillstand des Kraftfahrzeuges (35) eingeleitet wird.

2. Verfahren nach Anspruch 1,
**dadurch gekennzeichnet, dass**
die Geschwindigkeit der Annäherung des Fußes (4) zu dem Fahrpedal (2) erfasst wird und in Abhängigkeit von der Geschwindigkeit der Annäherung wenigstens eine einzuleitende Maßnahme ausgewählt wird und/oder der Grad bzw. die Größe der wenigstens einen eingeleiteten Maßnahme bestimmt wird.

3. Verfahren nach einem oder mehreren der vorhergehenden Ansprüche,
**dadurch gekennzeichnet, dass**
die wenigstens eine Maßnahme wenigstens einen Parameter des Antriebsmotors (13) und/oder eines Getriebes (20) verändert.

4. Verfahren nach einem oder mehreren der vorhergehenden Ansprüche, **dadurch gekennzeichnet, dass**
die wenigstens eine Maßnahme eine Erhöhung der Zündwinkelreserve und/oder
ein Abschalten wenigstens eines Verbrauchers (22), z. B. ein Klimakompressor (23), ein Stromgenerator (24), eine Wasserpumpe (25) oder eine elektrische Heizeinrichtung (26),
und/oder
ein Starten des Verbrennungsmotors (13) bei dem Kraftfahrzeug (35) mit einer Start-Stop-Automatik
und/oder
eine Erhöhung der Drehzahl des Antriebsmotors (13) und/oder
eine Öldruckaktivierung bzw. Öldruckveränderung eines Automatikgetriebes (21), insbesondere bei dem Kraftfahrzeug (35) mit einer Start-Stop-Automatik,
und/oder
eine Erhöhung des Öldruckes in einer Kupplungsansteuerung (28) und/oder
eine Erhöhung des Ladedruckes bei dem Verbrennungsmotor (13) mit Aufladung
und/oder
ein Schalten von "Neutral" auf "Drive" bei dem Kraftfahrzeug (35) mit Automatikgetriebe (21)
und/oder
eine Betriebsartenumschaltung bei dem Verbrennungsmotor (13) mit Benzindirekteinspritzung von einem energiesparenden Schichtbetrieb in einen leistungsorientierten Homogenbetrieb
und/oder
eine Veränderung der Übersetzung des Getriebes (20) des Kraftfahrzeuges (35) ist.

5. Verfahren nach einem oder mehreren der vorhergehenden Ansprüche,
**dadurch gekennzeichnet, dass**
die wenigstens eine eingeleitete Maßnahme nach einer vorgegebenen Zeit beendet wird, sofern der Fuß (4) das Fahrpedal (2) nicht berührt oder
die wenigstens eine Maßnahme nach einer Berührung des Fahrpedales (2) mit dem Fuß (4) beendet wird

## Claims

1. Method for performing open-loop and/or closed-loop control of the power of a drive engine (13), in particular internal combustion engine (13), in a motor vehicle (35), comprising the steps:
- detecting the position of an accelerator pedal (2),
- changing the position of the accelerator pedal (2) by moving the accelerator pedal (2) by means of mechanical contact by a foot (4) of a driver (6),
- controlling the power of the drive engine (13) with the at least one actuator element (14), for example a throttle valve (15), as a function of the detected position of the accelerator pedal (2),
- the distance between the driver's (6) foot (4) and the accelerator pedal (2) is detected, and when at least one predefined minimum distance of the foot (4) from the accelerator pedal (2) is undershot at least one measure is initiated,
- **characterized in that**
the at least one measure reduces the risk of the drive engine (13) stalling during starting up after a stationary state of the motor vehicle (35), wherein the at least one measure is initiated exclusively when the motor vehicle (35) is in a stationary state.

2. Method according to Claim 1,
**characterized in that**
the speed with which the foot (4) approaches the accelerator pedal (2) is detected, and at least one measure which is to be initiated is selected as a function of the speed of the approach and/or the degree or the size of the at least one initiated measure is determined.

3. Method according to one or more of the preceding claims,
**characterized in that**
the at least one measure changes at least one parameter of the drive engine (13) and/or of a gearbox (20).

4. Method according to one or more of the preceding claims,
**characterized in that**
the at least one measure is an increase in the ignition angle reserve,
and/or
switching off at least one load (22), for example an air conditioning system compressor (23), a power generator (24), a water pump (25) or an electric heating device (26),
and/or
starting the internal combustion engine (13) if the motor vehicle (35) has a start/stop automatic system,
and/or
increasing the rotational speed of the drive engine (13),
and/or
actuating or changing the oil pressure of an automatic transmission (21), in particular if the motor vehicle (35) has a start/stop automatic system,
and/or
increasing the oil pressure in a clutch actuation system (28),
and/or
increasing the charge pressure if the internal combustion engine (13) has supercharging,
and/or
shifting from "neutral" to "drive" if the motor vehicle (35) has an automatic transmission (21), and/or
switching over the operating mode if the internal combustion engine (13) has direct petrol injection, from an energy-saving stratified mode into a power-oriented homogenous mode,
and/or
changing the transmission ratio of the gearbox (20) of the motor vehicle (35).

5. Method according to one or more of the preceding claims,
**characterized in that**
the at least one initiated measure is ended after a predefined time if the foot (4) does not make contact with the accelerator pedal (2),
or
the at least one measure is ended after the foot (4) is placed in contact with the accelerator pedal (2).

## Revendications

1. Procédé de commande et/ou de régulation de la puissance d'un moteur d'entraînement (13), notamment d'un moteur à combustion interne (13), dans un véhicule automobile (35), comprenant les étapes suivantes :
- détection de la position d'une pédale d'accélérateur (2),
- modification de la position de la pédale d'accélérateur (2) en provoquant le déplacement de la pédale d'accélérateur (2) par contact mécanique d'un pied (4) d'un conducteur (6),
- commande de la puissance du moteur d'entraînement (13) avec l'au moins un actionneur (14), par exemple un clapet d'étranglement (15), en fonction de la position détectée de la pédale d'accélérateur (2),
- détection de l'écart entre le pied (4) du conducteur (6) et la pédale d'accélérateur (2) et initiation d'au moins une action s'il devient inférieur à au moins un écart minimal prédéfini entre le pied (4) et la pédale d'accélérateur (2),
- **caractérisé en ce que**
l'au moins une action réduit le risque d'un calage du moteur d'entraînement (13) lors du démarrage après une immobilisation du véhicule automobile (35), l'au moins une action étant initiée exclusivement lors d'une immobilisation du véhicule automobile (35).

2. Procédé selon la revendication 1, **caractérisé en ce que** la vitesse de l'approche du pied (4) vers la pédale d'accélérateur (2) est détectée et, en fonction de la vitesse de l'approche, au moins une action à initier est sélectionnée et/ou le degré ou la grandeur de l'au moins une action initiée est défini(e).

3. Procédé selon une ou plusieurs des revendications précédentes, **caractérisé en ce que** l'au moins une action modifie au moins un paramètre du moteur d'entraînement (13) et/ou d'une boîte de vitesses (20).

4. Procédé selon une ou plusieurs des revendications précédentes, **caractérisé en ce que** l'au moins une action est une augmentation de la réserve d'angle de came
et/ou
une déconnexion d'au moins une charge (22), par exemple un compresseur de climatisation (23), un générateur électrique (24), une pompe à eau (25) ou un dispositif de chauffage électrique (26),
et/ou
un démarrage du moteur à combustion interne (13) lorsque le véhicule automobile (35) est équipé d'un système start-stop automatique
et/ou
une augmentation de la vitesse de rotation du moteur d'entraînement (13)
et/ou
une activation de la pression d'huile ou une modification de la pression d'huile d'une boîte de vitesses automatique (21), notamment lorsque le véhicule automobile (35) est équipé d'un système start-stop automatique,
et/ou
une augmentation de la pression d'huile dans une commande d'accouplement (28)
et/ou
une augmentation de la pression de charge lorsque le moteur à combustion interne (13) est doté d'une suralimentation
et/ou
un changement de rapport de « neutre » en « conduite » lorsque le véhicule automobile (35) est équipé d'une boîte de vitesses automatique (21)
et/ou
une permutation du mode de fonctionnement avec le moteur à combustion interne (13) à injection directe d'essence d'un régime en couches à économies d'énergie en un régime homogène orienté vers la puissance et/ou
une modification du rapport de démultiplication de la boîte de vitesses (20) du véhicule automobile (35).

5. Procédé selon une ou plusieurs des revendications précédentes, **caractérisé en ce que** l'au moins une action initiée prend fin après une durée prédéfinie, sous réserve que le pied (4) ne touche pas la pédale d'accélérateur (2)
ou
l' au moins une action prend fin après un contact de la pédale d'accélérateur (2) avec le pied (4).
